# EUROPEAN PATENT SPECIFICATION

(11) **EP 3 439 236 B1**
(45) Date of publication and mention of the grant of the patent: **04.05.2022**
(21) Application number: 17773050.4
(22) Date of filing: 16.03.2017
(51) Int. Cl.: H04L 12/24, H04L 29/08

(54) **CONFIGURATION INFORMATION PUSH METHOD AND DEVICE**
VERFAHREN UND VORRICHTUNG ZUM KONFIGURATIONSINFORMATIONS-PUSH
PROCÉDÉ ET DISPOSITIF DE POUSSÉE D'INFORMATIONS DE CONFIGURATION

(30) Priority: 28.03.2016 CN 201610183710
(43) Date of publication of application: 06.02.2019
(73) Proprietor: Alibaba Group Holding Limited, Grand Cayman (KY)
(72) Inventor: DING, Qiaoyi, Hangzhou Zhejiang 311121 (CN); ZHANG, Fengting, Hangzhou Zhejiang 311121 (CN)
(74) Representative: Branderhorst, Matthijs Pieter Arie
(86) International application number: PCT/CN2017/076890
(87) International publication number: WO 2017/167020

(56) References cited:
- CN-A- 102 006 183
- CN-A- 103 095 819
- CN-A- 104 519 095
- CN-A- 104 660 708
- CN-A- 104 778 063
- US-A- 6 101 541
- US-A1- 2015 358 217

## Description

### TECHNICAL FIELD

The present invention relates to the communications field, and in particular, to a configuration information push method and device.

### BACKGROUND

In a process in which an application system executes a program, to flexibly cope with a requirement change, some configurations that are often changed are settled into a file. In different deployment and application scenarios, different configurations need to be changed before deployment is performed. When a configuration is changed, based on a real-time configuration push system, the application system can have the configuration change that immediately takes effect without restarting a program. For example, a database cluster is used in a transaction platform, and when a program is started, a connection is established to a database by using a group of database connection parameters. When a peak hour for use of the transaction platform arrives, some database connection parameters need to be switched. In this case, based on the real-time configuration push system, an application on the transaction platform can immediately take effect without restarting the application, so that execution of a service is not affected as much as possible. The real-time configuration push system needs to efficiently find that a new configuration value of a server is inconsistent with an original configuration value of a client, and pushes the new configuration value to the client in real time.

In the existing technology, a client interacts with a server by using a Hypertext Transfer Protocol (HTTP) short connection, and the client periodically initiates a short connection to perform polling on the server. However, in a currently used manner of periodically performing polling on the server, duration of each polling is short, and a wait time for polling is long. Consequently, real-time performance of configuration pushing cannot be ensured.

US 2015/358217 A1 discloses a web polling system, comprising at least one client, a web server, and a database server, wherein the client is configured to transmit a web polling request; the database server is configured to push data added locally to the web server in real time; and the web server is configured to store the data pushed by the database server, to query in the data stored by the web server itself upon receiving the Web polling request sent by the client, and to return the found data to the client. US 2015/358217 A1 does not disclose, as required by claim 1, the server pushing, if, in the duration of a short connection, current configuration information of a target configuration item in corresponding local configuration items is inconsistent with configuration information of a corresponding configuration item in a polling request sent by the client, the target configuration item to the client.

### SUMMARY

The present invention provides configuration information push methods and devices as set out in the accompanying claims, to resolve a problem that when an existing client periodically performs polling on a server, real-time performance of configuration pushing cannot be ensured due to short polling duration.

According to a first aspect of the present invention there is provided a configuration information push method, including:
establishing a short connection with a client;
obtaining a polling request sent by the client, where the polling request includes configuration information of configuration items;
determining whether the configuration information of the configuration items in the polling request is respectively consistent with current configuration information of corresponding local configuration items;
if the configuration information of the configuration items in the polling request is respectively consistent with current configuration information of corresponding local configuration items:
   keeping the short connection to the client within a preset polling duration; and pushing, if, in the duration of the short connection, current configuration information of a target configuration item in the local configuration items is inconsistent with configuration information of a corresponding configuration item in the polling request, the target configuration item to the client; and
   receiving a configuration information request from the client; and
   sending, from the server to the client, the current configuration information of the target configuration item.

According to a second aspect, the present invention also provides a configuration information push method, including:
establishing a short connection with a server;
sending a polling request to the server, so that the server determines whether configuration information of configuration items in the polling request is respectively consistent with current configuration information of corresponding local configuration items, where
the polling request includes the configuration information of the configuration items;
receiving a connection keeping request sent by the server for keeping a short connection to the server within preset polling duration, where the connection keeping request is sent by the server when the server determines that the configuration information of the configuration items in the polling request is respectively consistent with the current configuration information of the corresponding local configuration items;
receiving, from the server, a push message used to push a target configuration item, where the push message is sent by the server when the server determines, in the duration of the short connection, that current configuration information of the target configuration item is inconsistent with configuration information of a corresponding configuration item in the polling request, and the target configuration item is a configuration item in the local configuration items;
sending a configuration information request to the server, wherein the configuration information request is used to request the server to deliver the current configuration information of the target configuration item;
receiving from the server the current configuration information of the target configuration item; and
updating a configuration of the target configuration item to the current configuration information.

The present invention also provides configuration information push devices as defined in claims 12 and 13.

When configuration information of a configuration item is not updated, a short connection needs to be kept within the preset polling duration, so that the polling duration is correspondingly extended, and a change in the configuration information of the configuration item can be sensed in time, thereby ensuring real-time performance of configuration information pushing.

### BRIEF DESCRIPTION OF THE DRAWINGS

FIG. 1 is a schematic flowchart of a configuration information push method according to Embodiment 1 of the present invention;
FIG. 2 is a schematic flowchart of a configuration information push method according to Embodiment 2 of the present invention;
FIG. 3 is a schematic application diagram of the configuration information push method according to Embodiment 2 of the present invention;
FIG. 4 is a schematic structural diagram of a configuration information push device according to Embodiment 3 of the present invention;
FIG. 5 is a schematic structural diagram of a configuration information push device according to Embodiment 4 of the present invention; and
FIG. 6 is a schematic structural diagram of a configuration information push system according to Embodiment 5 of the present invention.

### DETAILED DESCRIPTION OF THE INVENTION

The following describes in detail a configuration information push method and device that are provided in embodiments of the present invention with reference to the accompanying drawings.

### Embodiment 1

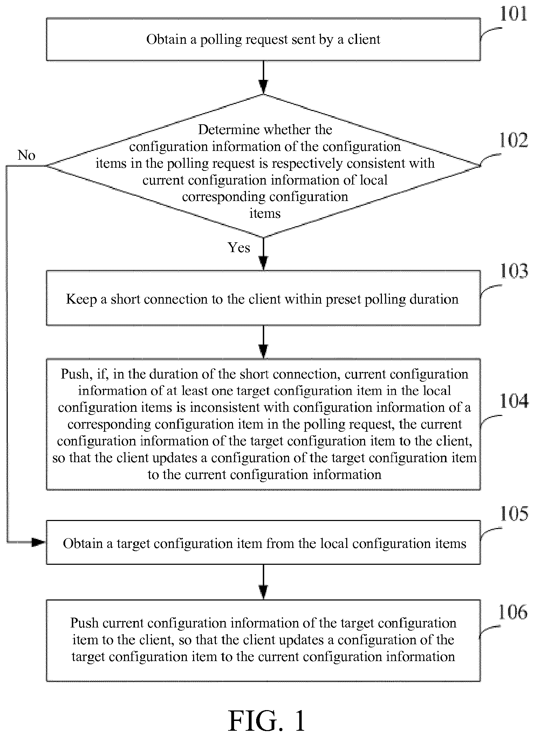

As shown in FIG. 1, FIG. 1 is a schematic flowchart of a configuration information push method according to Embodiment 1 of the present invention. This embodiment is performed by a server. The configuration information push method includes the following steps.

S101: Obtain a polling request sent by a client.

The polling request includes configuration information of configuration items.

A short connection is established between the client and the server. In this embodiment, the server establishes the short connection to the client based on the HTTP. Since the HTTP communication protocol is a text protocol, cross-language pushing of configuration information can be implemented.

After the short connection is established, the server may continually receive the polling request that is sent by the client by using the short connection, to perform polling on a configuration change state of each configuration item in the server. The polling request includes the configuration information of the configuration items, and the configuration information is information configured by the server for the configuration item last time. Configuration information is a configuration value of a configuration item.

S102: Determine whether the configuration information of the configuration items in the polling request is respectively consistent with current configuration information of corresponding local configuration items.

After receiving the polling request, the server determines whether the current configuration information of the locally stored configuration items is respectively consistent with the configuration information of the corresponding configuration items that is sent by the client. The locally stored configuration items are completely the same as the configuration items in the client, but configuration information of a local configuration item may be different from configuration information of a configuration item in the client. For example, the configuration items include a configuration item 1, a configuration item 2, and a configuration item 3, and in the polling request, configuration information of the configuration item 1 is data 1, configuration information of the configuration item 2 is data 2, and configuration information of the configuration item 3 is data 3. When configuration information of a locally stored configuration item 1 to a locally stored configuration item 3 is respectively the data 1 to the data 3, current configuration information of the locally stored configuration items is respectively consistent with the configuration information of the corresponding configuration items that is sent by the client. That is, the determining result is yes, and step S103 is performed. If configuration information of the locally stored configuration item 2 is data 4, the current configuration information of the locally stored configuration items is not consistent with the configuration information of the corresponding configuration items that is sent by the client. That is, the determining result is no, and step S105 is performed.

S103: Keep a short connection to the client within preset polling duration.

When it is determined that the current configuration information of the locally stored configuration items is consistent with the configuration information of the corresponding configuration items that is sent by the client, that is, configuration information of a configuration item in the client is not updated, the server may keep the short connection to the client within the preset polling duration. Specifically, the server sends an asynchronous processing request to the client. The asynchronous processing request instructs the client to keep the short connection to the server within the preset polling duration. For example, the short connection to the client may be kept by using an asynchronous Servlet.

S104: Push, in the duration of the short connection, if current configuration information of at least one target configuration item in the local configuration items is inconsistent with configuration information of a corresponding configuration item in the polling request, the current configuration information of the target configuration item to the client, so that the client updates a configuration of the target configuration item to the current configuration information.

When the duration of the short connection to the client has not reached the preset polling duration, when current configuration information of at least one target configuration item in the locally stored configuration items in the server is inconsistent with configuration information of a corresponding configuration item in the polling request, that is, configuration information of the target configuration item in the server is changed, the server may push the current configuration information of the target configuration item to the client.

For example, the server may send, to the client, a polling response indicating a configuration change. The polling response includes the current configuration information of the target configuration item. For example, when the target configuration item is the configuration item 2, the polling response is: configuration item 2, data 4. Correspondingly, after receiving the current configuration information of the target configuration item, the client needs to update the configuration of the target configuration item to the current configuration information.

In this embodiment, when the target configuration item is obtained, the target configuration item and the current configuration information of the target configuration item are directly sent to the client, thereby reducing a processing time of a polling result, and improving real-time performance of configuration information pushing.

Optionally, after obtaining the target configuration item, the server may first add the target configuration item to the polling response and send the polling response to the client, and after receiving a configuration information request message sent by the client, the server sends a configuration value of the target configuration item to the client. Although a processing time of a polling result is extended, when the client does not need to update the configuration item, a waste of resources can be reduced.

Further, after the duration of the short connection to the client reaches the preset polling duration, if the current configuration information of the locally stored configuration items in the server is respectively consistent with the configuration information of the corresponding configuration items in the polling request, the server may send, to the client, a polling response indicating no configuration change. The polling response is null.

In this embodiment, the short connection to the client may be kept until a preset polling time is reached and may be broken after that. When the short connection is kept within the preset polling time, if the server detects that current configuration information of at least one target configuration item in the local configuration items is inconsistent with previous configuration information of a corresponding configuration item that is sent to the client, the server may deliver the current configuration information of the target configuration item to the client, so that configuration information of the configuration item in the client is consistent with the configuration information of the corresponding configuration item in the server.

Alternatively, in the duration of the short connection, after a user corresponding to the client actively changes configuration information of at least one configuration item in the polling request, the configuration information is added to the polling request and sent to the server. The server can also detect that current configuration information of at least one target configuration item in the local configuration items is different from the changed configuration information of the configuration item in the polling request, and the server may deliver the current configuration information of the target configuration item to the client, so that the client reconfigures the target configuration item of the client with the configuration information delivered by the server.

Optionally, in the duration of the short connection, when inconsistency between current configuration information of at least one target configuration item in the local configuration items and configuration information of a corresponding configuration item in the polling request occurs the first time, the server pushes the current configuration information of the target configuration item to the client, and then, immediately breaks the short connection to the client. After the current configuration information of the target configuration item is sent, it indicates that a configuration in the client is already the newest configuration. To continue to update the configuration in the client in real time, the short connection to the client needs to be immediately broken. When the short connection to the client is broken, after a next preset time interval is reached, a polling request sent by the client can continue to be received, so as to continue to update the configuration item in the client in real time.

To improve real-time performance of configuration updating for the client, a time interval for performing polling on the server can be shortened, so that after configuration information of a configuration item in the server is updated, information about a corresponding configuration item can be updated in the client more quickly.

S105: Obtain a target configuration item from the local configuration items.

If it is determined that configuration information of at least one configuration item in the local configuration items is inconsistent with configuration information of a corresponding configuration item in the polling request, it indicates that current configuration information of the at least one configuration item whose configuration information is changed needs to be sent to the client, and the at least one configuration item whose configuration information is changed is obtained. In this embodiment, the at least one configuration item whose configuration information is inconsistent with the configuration information of the corresponding configuration item in the polling request is referred to as the target configuration item.

S106: Push current configuration information of the target configuration item to the client, so that the client updates a configuration of the target configuration item to the current configuration information.

After obtaining the target configuration item, the server pushes the current configuration information of the target configuration item to the client. For example, the server may send, to the client, a polling response indicating a configuration change. The polling response includes the current configuration information of the target configuration item. Correspondingly, after receiving the current configuration information of the target configuration item, the client needs to update the configuration of the target configuration item to the current configuration information. After the current configuration information of the target configuration item is pushed, the short connection to the client is broken, so that after a next preset time interval is reached, a polling request sent by the client continues to be received, so as to update the configuration item in the client in real time.

According to the configuration information push method provided in this embodiment, a polling request sent by a client is obtained; whether configuration information of configuration items in the polling request is respectively consistent with current configuration information of corresponding local configuration items is determined; if yes, a short connection to the client is kept within preset polling duration; and if in the duration of the short connection, current configuration information of at least one target configuration item in the local configuration items is inconsistent with configuration information of a corresponding configuration item in the polling request, the current configuration information of the target configuration item is pushed to the client, so that the client updates a configuration of the target configuration item to the current configuration information. In this embodiment, when configuration information of a configuration item is not updated, a short connection needs to be kept within preset polling duration, so that the polling duration is correspondingly extended, and a change in the configuration information of the configuration item can be sensed in time, thereby ensuring real-time performance of configuration information pushing.

### Embodiment 2

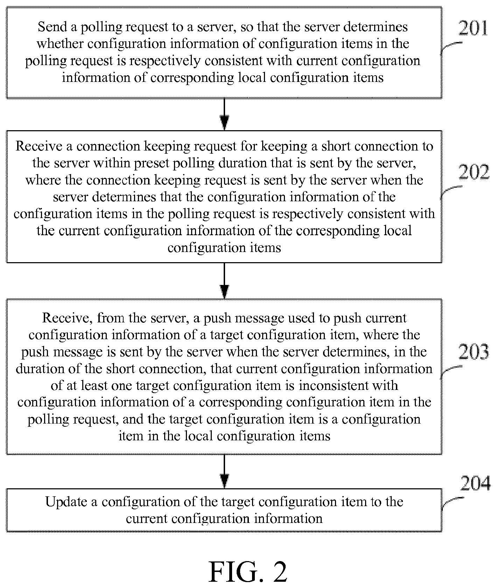

As shown in FIG. 2, FIG. 2 is a schematic flowchart of a configuration information push method according to Embodiment 2 of the present invention. This embodiment is executed by a client. The configuration information push method includes the following steps.

S201: Send a polling request to a server, so that the server determines whether configuration information of configuration items in the polling request is respectively consistent with current configuration information of corresponding local configuration items.

The polling request includes configuration information of configuration items.

In this embodiment, before sending the polling request to the server, the client needs to establish a short connection to the server based on the HTTP. The HTTP communication protocol is a text protocol, so that cross-language pushing of configuration information can be implemented.

After the connection is established, the client sends the polling request to the server through the short connection, to performing polling on a configuration change state of each configuration item in the server. The polling request includes the configuration information of the configuration items, and the configuration information is information configured by the server for the configuration last time. Configuration information is a configuration value of a configuration item.

Correspondingly, after receiving the polling request, the server determines whether current configuration information of locally stored configuration items is respectively consistent with configuration information of corresponding configuration items that is sent by the client. The locally stored configuration items are all the same as the configuration items in the client, but configuration information of a local configuration item may be different from configuration information of a configuration item in the client.

S202: Receive a connection keeping request for keeping a short connection to the server within preset polling duration that is sent by the server, where the connection keeping request is sent by the server when the server determines that the configuration information of the configuration items in the polling request is respectively consistent with the current configuration information of the corresponding local configuration items.

When the server determines that the current configuration information of the locally stored configuration items is consistent with the configuration information of the corresponding configuration items that is sent by the client, it indicates that the configuration information of the configuration items in the client is not updated. In this case, the client receives the connection keeping request for keeping the short connection to the server within the preset polling duration that is sent by the server, and after receiving the connection keeping request, the client continues keeping the short connection within the preset polling duration.

Further, the connection keeping request is an asynchronous processing request used to instruct to keep the short connection to the server within the preset polling duration. For example, the short connection to the server may be kept within the preset polling duration by using an asynchronous Servlet.

S203: Receive, from the server, a push message used to push current configuration information of a target configuration item, where the push message is sent by the server when the server determines, in the duration of the short connection, that current configuration information of at least one target configuration item is inconsistent with configuration information of a corresponding configuration item in the polling request, and the target configuration item is a configuration item in the local configuration items.

In the duration of the short connection to the client within the preset polling duration, if current configuration information of at least one target configuration item in the locally stored configuration items in the server is inconsistent with configuration information of a corresponding configuration item in the polling request, that is, configuration information of the target configuration item of the server is changed, the client receives the push message sent by the server. The push message includes the current configuration information of the target configuration item.

Optionally, the client receives a polling response indicating a configuration change and sent by the server. The polling response includes the target configuration item. After receiving the polling response, the client sends a configuration request message to the server, to request the server to deliver the current configuration information of the target configuration item to the client.

Further, after the short connection to the client reaches the preset polling duration, if the current configuration information of the locally stored configuration items in the server is respectively consistent with the configuration information of the corresponding configuration items in the polling request, the client receives a polling response indicating no configuration change and sent by the server, where the polling response is null; and the client senses that the server breaks the short connection to the client. Specifically, the client may obtain an indication message indicating that the short connection is broken, and after receiving the indication message, after a next preset time interval is reached, the client may continue to send a polling request to the server, so as to update the configuration item in real time.

S204: Update a configuration of the target configuration item to the current configuration information.

Correspondingly, after receiving the current configuration information of the target configuration item, the client needs to update the configuration of the target configuration item to the current configuration information.

During actual application, after sending the push message, the server immediately breaks the short connection to the client. Correspondingly, after the server breaks the short connection, the client can immediately sense that the short connection is broken. To keep updating the configuration item in the client in real time, the client needs to start timing immediately according to a preset time interval, and after a next time interval is reached, re-sends a polling request to the server. In this embodiment, a time interval for performing polling on the server can be shortened, so that after configuration information of a configuration item in the server is updated, information of a corresponding configuration item can be updated in the client more quickly, thereby improving real-time performance of configuration updating in the client.

According to the configuration information push method provided in this embodiment, a polling request is sent to a server, so that the server determines whether configuration information of configuration items in the polling request is respectively consistent with current configuration information of corresponding local configuration items; if yes, a short connection to the server is kept within preset polling duration; and if, in the duration of the short connection, current configuration information of at least one target configuration item in the local configuration items is inconsistent with configuration information of a corresponding configuration item in the polling request, a client receives a push message including the current configuration information of the target configuration item, and the client updates a configuration of the target configuration item to the current configuration information. In this embodiment, when configuration information of a configuration item is not updated, a short connection needs to be kept within preset polling duration, so that the polling duration is correspondingly extended, and a change in the configuration information of the configuration item can be sensed in time, thereby ensuring real-time performance of configuration information pushing.

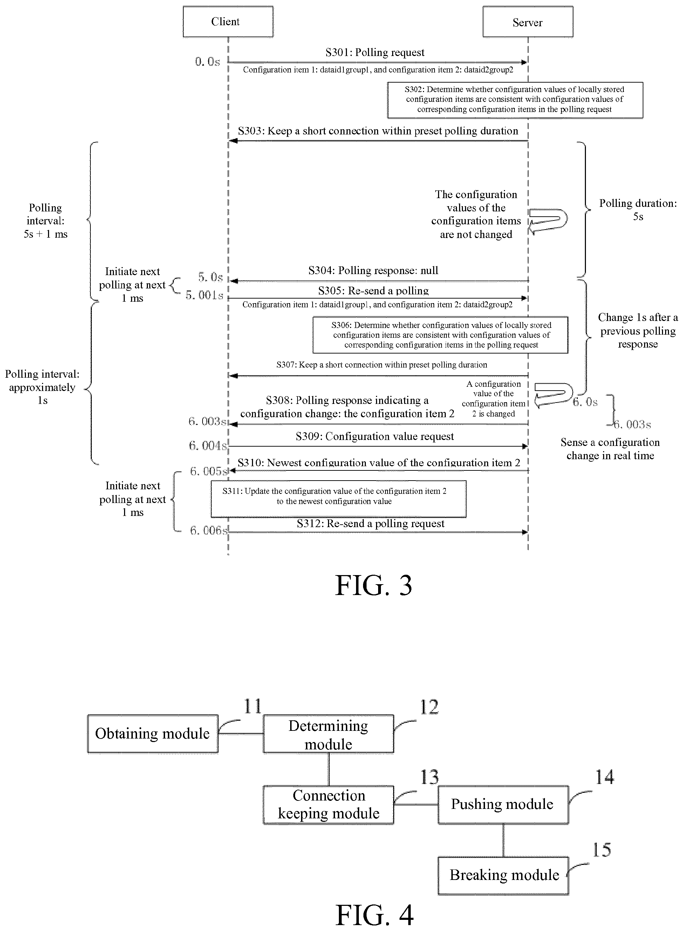

As shown in FIG. 3, FIG. 3 shows a specific application example of the foregoing embodiment of the present invention, and is used to explain and describe the foregoing embodiment. In this example, a client interacts with a server by using an HTTP short connection, and the client periodically initiates a polling request based on the short connection, to perform polling on the server.

S301: A client sends a polling request to a server.

Two configuration items: a configuration item 1 and a configuration item 2 are subscribed to in the polling request. A configuration value of the configuration item is dataid1 group 1, and a configuration value of the configuration item 2 is dataid2 group2.

Assuming that at a moment of 0.0s, the client sends the polling request to the server, to perform polling on a change state of configuration information of a configuration item. Generally, the configuration information of the configuration item is a configuration value of the configuration item.

S302: After receiving the polling request, the server determines whether configuration values of locally stored configuration items are consistent with configuration values of corresponding configuration items in the polling request.

If yes, step S303 is performed.

S303: The server keeps the short connection to the client within preset polling duration based on an asynchronous Servlet technology.

If yes, it indicates that the server does not update the configuration values of the configuration items, that is, a polling result is no change. The server keeps the short connection to the client within the preset polling duration based on the asynchronous Servlet technology. In this example, the preset polling duration is 5s.

S304: The server sends a polling response to the client.

The polling response includes null.

In this example, the preset polling duration is 5s, and the server waits for reaching of the polling duration of 5s, that is, a moment at the 5.0s. In this example, within a time of 5s within which the short connection is kept, the configuration information of the configuration item 1 and the configuration item 2 is not changed in the server, so that the server sends, to the client, a polling response indicating no configuration change, where the polling response includes null, and breaks the short connection.

S305: After a preset time interval is reached, the client re-sends a polling request to the server.

After the client senses that the short connection to the server is broken, when a next preset time interval is reached, the client re-sends a polling request to the server, to perform polling on a configuration change state. In this example, the preset time interval is 1 ms, that is, a moment of 5.001s. A polling request is re-sent to the server. A configuration item and configuration information of the configuration item are subscribed to in the polling request. In this example, the configuration items that are subscribed to are the configuration item 1 and the configuration item 2. After the previous polling, polling results of the configuration item 1 and the configuration item 2 are no change, so that the configuration value of the configuration item is still dataid1 group 1, and the configuration value of the configuration item 2 is still dataid2 group2.

S306: The server determines whether configuration values of locally stored configuration items are consistent with configuration values of corresponding configuration items in the polling request.

If yes, step S307 is performed.

S307: The server keeps a short connection to the client within preset polling duration based on an asynchronous Servlet technology.

S308: When the short connection is kept within the polling duration, when the configuration value of the configuration item 2 is changed, the server sends, to the client, a polling response indicating a configuration change, where the polling response carries the configuration item 2.

If yes, it indicates that the server does not update the configuration values of the configuration items, that is, the polling result is no change, in the duration of the short connection within the polling duration, the configuration item 2: dataid2 group2 is changed 1s after the client sends the polling response indicating no configuration change, that is, at a moment of 6.0s, and the polling response indicating a configuration change is sent to the client. The polling response includes the configuration item 2, and the configuration item 2 is the target configuration item. Assuming that the time for obtaining the information on the change obtained through polling is 3 ms, the polling response indicating a configuration change is sent to the client at a moment of 6.003s. That is, at the moment of 6.003s, the client senses the configuration change, and the moment of 6.003s is close to a time at which the configuration is changed, that is, the moment of 6.0s, so that it may be considered that the client senses the configuration change in real time.

S309: The client sends a configuration value request to the server.

Specifically, after receiving, at the moment of 6.003s, the polling response indicating a configuration change, the client sends the configuration value request to the server at 6.004s, to request to configure the configuration item 2 as the newest configuration value in the server. The newest configuration value is a current configuration value of the configuration item 2.

S310: The server sends newest configuration value of the configuration item 2 to the client.

After receiving the configuration value request, the server sends the newest configuration value of the configuration item 2 to the client at a moment of 6.005s. Correspondingly, after receiving the newest configuration value, the client updates the configuration value of the configuration item 2 to the newest configuration value, and breaks the short connection.

S311: The client updates the configuration value of the configuration item 2 to the newest configuration value.

Specifically, after receiving the newest configuration value at the moment of 6.005s, the client updates the configuration value of the configuration item 2 to the newest current configuration value of the configuration item 2 in the polling response.

Optionally, in step S308, the polling response indicating a configuration change and sent by the server to the client carries both the configuration item 2 and the newest configuration value of the configuration item 2. The newest configuration value of the configuration item 2 is dataid2%02%group2. After receiving the polling response, the client updates the configuration value of the configuration item 2 to the newest configuration value.

Herein, it should be noted that, although the preset polling duration is 5s, for a case in which a configuration is changed when the short connection is kept within the polling duration, it takes only approximately 1s for the client to update the configuration value of the corresponding configuration item to the newest configuration value. To improve real-time performance of updating a configuration of a configuration item by the client, after the configuration is updated, the short connection needs to be broken immediately, so that the client sends a next polling request as soon as possible, so as to perform polling on a configuration change state, thereby pushing information to the client in real time.

S312: After a preset time interval is reached, the client re-sends a polling request to the server.

After sensing that the short connection to the server is broken, the client re-sends a polling request to the server at next 1 ms, that is, a moment of 6.006s, to performing polling on a configuration change state. The polling request includes the configuration item 1 and the configuration item 2 and respective configuration values. In this step, the configuration value of the configuration item 1 is dataid1 group 1, and the configuration value of the configuration item 2 is dataid2%2%group2.

In this example, when configuration information of a configuration item is not updated, a short connection is kept within preset polling duration, which is equivalent to that the polling duration is extended, and a change in the configuration information of the configuration item can be sensed in time, thereby ensuring real-time performance of configuration information pushing.

### Embodiment 3

As shown in FIG. 4, FIG. 4 is a schematic structural diagram of a configuration information push device according to Embodiment 3 of the present invention. The configuration information push device includes an obtaining module 11, a determining module 12, a connection keeping module 13, a push module 14, and a breaking module 15.

The obtaining module 11 is configured to obtain a polling request sent by a client, where the polling request includes configuration information of configuration items.

The determining module 12 is configured to determine whether the configuration information of the configuration items in the polling request is respectively consistent with current configuration information of corresponding local configuration items.

The connection keeping module 13 is configured to keep a short connection to the client within preset polling duration if a determining result is yes.

The push module 14 is configured to push, if in the duration of the short connection, current configuration information of at least one target configuration item in the local configuration items is inconsistent with configuration information of a corresponding configuration item in the polling request, the current configuration information of the target configuration item to the client, so that the client updates a configuration of the target configuration item to the current configuration information.

The breaking module 15 is configured to break the short connection to the client.

The breaking module 15 is specifically configured to: push if in the duration of the short connection, inconsistency between current configuration information of at least one target configuration item in the local configuration items and configuration information of a corresponding configuration item in the polling request occurs the first time, the current configuration information of the target configuration item to the client, so that the client updates a configuration of the target configuration item to the current configuration information; and then break the short connection to the client.

The breaking module 15 is further specifically configured to: when the preset polling duration is reached, break the short connection to the client.

Further, the push module 14 is further configured to: when the determining result of the determining module 12 is no, obtain the target configuration item from the local configuration items; and push the current configuration information of the target configuration item to the client, so that the client updates the configuration of the target configuration item to the current configuration information.

Further, the push module 14 is specifically configured to: send a polling response to the client, where the polling response includes the target configuration item; receive a configuration information request sent by the client; and send the current configuration information of the target configuration item to the client, so that the client updates the configuration of the target configuration item to the current configuration information.

Further, the obtaining module 11 is further configured to: after the breaking module 15 breaks the short connection to the client, after a preset time interval is reached, re-obtain a polling request sent by the client.

Further, the connection keeping module 13 is specifically configured to: when the determining result of the determining module is yes, send an asynchronous processing request to the client, so that the client keeps the short connection within the preset polling duration.

According to the configuration information push device provided in this embodiment, a polling request sent by a client is obtained; whether configuration information of configuration items in the polling request is respectively consistent with current configuration information of corresponding local configuration items is determined; if yes, a short connection to the client is kept within preset polling duration; and if, in the duration of the short connection, current configuration information of at least one target configuration item in the local configuration items is inconsistent with configuration information of a corresponding configuration item in the polling request, the current configuration information of the target configuration item is pushed to the client, so that the client updates a configuration of the target configuration item to the current configuration information. In this embodiment, when configuration information of a configuration item is not updated, a short connection needs to be kept within preset polling duration, so that the polling duration is correspondingly extended, and a change in the configuration information of the configuration item can be sensed in time, thereby ensuring real-time performance of configuration information pushing.

### Embodiment 4

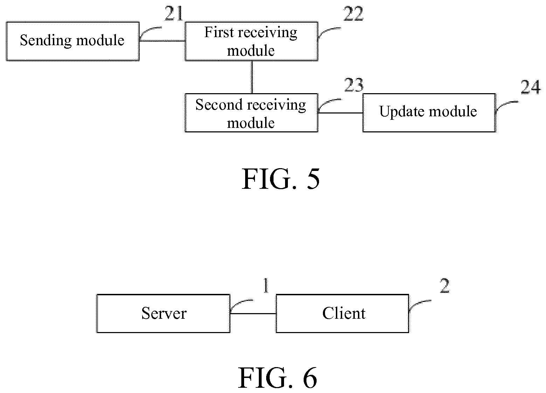

As shown in FIG. 5, FIG. 5 is a schematic structural diagram of a configuration information push device according to Embodiment 4 of the present invention. The configuration information push device includes a sending module 21, a first receiving module 22, a second receiving module 23, and an update module 24.

The sending module 21 is configured to send a polling request to a server, so that the server determines whether configuration information of configuration items in the polling request is respectively consistent with current configuration information of corresponding local configuration items.

The polling request includes the configuration information of the configuration items.

The first receiving module 22 is configured to receive a connection keeping request for keeping a short connection to the server within preset polling duration that is sent by the server.

The connection keeping request is sent by the server when the server determines that the configuration information of the configuration items in the polling request is consistent with the current configuration information of the corresponding local configuration items.

The second receiving module 23 is configured to receive, from the server, a push message used to push current configuration information of a target configuration item.

The push message is sent by the server when the server determines, in the duration of the short connection, that current configuration information of at least one target configuration item is inconsistent with configuration information of a corresponding configuration item in the polling request, and the target configuration item is a configuration item in the local configuration items.

The update module 24 is configured to update a configuration of the target configuration item to the current configuration information.

Further, the sending module 21 is further configured to: before the second receiving module receives, from the server, the push message used to push the current configuration information of the target configuration item, send a configuration information request to the server, where the configuration information request is used to request the server to deliver the current configuration information of the target configuration item.

Further, the first receiving module 22 is further configured to receive an indication message for breaking the short connection that is sent by the server.

The indication message is sent by the server after the preset polling duration is reached and before the server sends the push message.

Further, the sending module 21 is further configured to: after the short connection to the server is broken, re-send a polling request to the server after a preset time interval is reached.

Further, the connection keeping request is an asynchronous processing request used to instruct to keep the short connection to the server within the preset polling duration.

Further, the sending module 21 is further configured to: after the update module 24 updates the configuration of the target configuration item to the current configuration information, re-send a polling request to the server after a preset time interval is reached.

According to the configuration information push device provided in this embodiment, a polling request is sent to a server, so that the server determines whether configuration information of configuration items in the polling request is respectively consistent with current configuration information of corresponding local configuration items; if yes, a short connection to the server is kept within preset polling duration; and if, in the duration of the short connection, current configuration information of at least one target configuration item in the local configuration items is inconsistent with configuration information of a corresponding configuration item in the polling request, a client receives a push message including the current configuration information of the target configuration item, and the client updates a configuration of the target configuration item to the current configuration information. In this embodiment, when configuration information of a configuration item is not updated, a short connection needs to be kept within preset polling duration, so that the polling duration is correspondingly extended, and a change in the configuration information of the configuration item can be sensed in time, thereby ensuring real-time performance of configuration information pushing.

### Embodiment 5

As shown in FIG. 6, FIG. 6 is a schematic structural diagram of a configuration information push system according to Embodiment 5 of the present invention. The configuration information push system includes a server 1 and a client 2. For a structure implementation and a processing process of the server 1, refer to descriptions in Embodiment 3 and FIG. 4 in this specification, and details are not described herein again. For a structure implementation and a processing process of the client 2, refer to descriptions in Embodiment 4 and FIG. 5 in this specification, and details are not described herein again.

In this embodiment, when configuration information of a configuration item is not updated, a short connection needs to be kept within preset polling duration, so that the polling duration is correspondingly extended, and a change in the configuration information of the configuration item can be sensed in time, thereby ensuring real-time performance of configuration information pushing.

Persons of ordinary skill in the art may understand that all or some of the steps of the method embodiments may be implemented by a program instructing relevant hardware. The program may be stored in a computer-readable storage medium. When the program is executed, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments, without departing from the scope of the claims.

## Claims

1. A configuration information push method performed by a server, comprising:
establishing a short connection with a client;
obtaining (S101, S301) a polling request sent by the client, wherein the polling request comprises configuration information of configuration items;
determining (S102, S302) whether the configuration information of the configuration items in the polling request is respectively consistent with current configuration information of corresponding local configuration items;
if the configuration information of the configuration items in the polling request is respectively consistent with current configuration information of corresponding local configuration items:
keeping (S103, S303) the short connection to the client within a preset polling duration; and
pushing (S104, S308), if, in the duration of the short connection, current configuration information of a target configuration item in the local configuration items is inconsistent with configuration information of a corresponding configuration item in the polling request, the target configuration item to the client;
receiving a configuration information request from the client; and
sending, from the server to the client, the current configuration information of the target configuration item.

2. The method according to claim 1, further comprising:
if the configuration information of the configuration items in the polling request is not respectively consistent with current configuration information of corresponding local configuration item:
obtaining the target configuration item from the local configuration items;
pushing the current configuration information of the target configuration item to the client, so that the client updates the configuration of the target configuration item to the current configuration information; and then
breaking the short connection to the client.

3. The method according to claim 1, wherein the pushing, if, in the duration of the short connection, current configuration information of at least one target configuration item in the local configuration items is inconsistent with configuration information of a corresponding configuration item in the polling request, the current configuration information of the target configuration item to the client, comprises:
sending a polling response to the client, wherein the polling response comprises the target configuration item.

4. The method according to claim 1, wherein the pushing, if in the duration of the short connection, current configuration information of a target configuration item in the local configuration items is inconsistent with configuration information of a corresponding configuration item in the polling request, the current configuration information of the target configuration item to the client, comprises:
pushing, if, in the duration of the short connection, inconsistency between current configuration information of at least one target configuration item in the local configuration items and configuration information of a corresponding configuration item in the polling request occurs the first time, the current configuration information of the target configuration item to the client; and then
immediately breaking the short connection to the client.

5. The method according to claim 3, wherein after the pushing, if, in the duration of the short connection, current configuration information of at least one target configuration item in the local configuration items is inconsistent with configuration information of a corresponding configuration item in the polling request, the current configuration information of the target configuration item to the client, the method comprises:
when the preset polling duration is reached, breaking the short connection to the client.

6. The method according to claim 4 or 5, wherein after the breaking the short connection to the client, the method comprises:
after a preset time interval is reached, re-obtaining a polling request sent by the client.

7. The method according to claim 1, wherein the keeping the short connection to the client within preset polling duration if the configuration information of the configuration items in the polling request is respectively consistent with current configuration information of corresponding local configuration items comprises:
sending an asynchronous processing request to the client, so that the client keeps the short connection within the preset polling duration.

8. A configuration information push method performed by a client, comprising:
establishing a short connection with a server;
sending (S201) a polling request to the server, so that the server determines whether configuration information of configuration items in the polling request is respectively consistent with current configuration information of corresponding local configuration items, wherein the polling request comprises the configuration information of the configuration items;
receiving (S202) a connection keeping request sent by the server for keeping the short connection to the server within preset polling duration, wherein the connection keeping request is sent by the server when the server determines that the configuration information of the configuration items in the polling request is respectively consistent with the current configuration information of the corresponding local configuration items;
receiving (S203), from the server, a push message used to push a target configuration item, wherein the push message is sent by the server when the server determines, in the duration of the short connection, that current configuration information of the target configuration item is inconsistent with configuration information of a corresponding configuration item in the polling request, and the target configuration item is a configuration item in the local configuration items;
sending a configuration information request to the server, wherein the configuration information request is used to request the server to deliver the current configuration information of the target configuration item;
receiving from the server the current configuration information of the target configuration item; and
updating (S204) a configuration of the target configuration item to the current configuration information.

9. The method according to claim 8, further comprising:
receiving an indication message for breaking the short connection that is sent by the server, wherein the indication message is sent by the server after the preset polling duration is reached and before the server sends the push message; and
after a preset time interval is reached, re-sending a polling request to the server.

10. The method according to claim 8 or 9, wherein the connection keeping request is an asynchronous processing request used to instruct to keep the short connection to the server within the preset polling duration.

11. The method according to claim 8, wherein after the updating a configuration of the target configuration item to the current configuration information, the method further comprises:
after a preset time interval is reached, re-sending a polling request to the server.

12. A configuration information push device corresponding to the server of claim 1, comprising means configured to carry out each of the steps of the method according to any one claims 1 to 7.

13. A configuration information push device corresponding to the client of claim 8, comprising means configured to carry out each of the steps of the method according to any one of claims 8 to 11.

## Patentansprüche

1. Konfigurationsinformationen-Schubverfahren, durchgeführt durch einen Server, umfassend:
Einrichten einer kurzen Verbindung mit einem Client;
Erlangen (S101, S301) einer durch den Client gesandten Abfrageanforderung, wobei die Abfrageanforderung Konfigurationsinformationen von Konfigurationselementen umfasst;
Bestimmen (S102, S302), ob die Konfigurationsinformationen der Konfigurationselemente in der Abfrageanforderung jeweils mit gegenwärtigen Konfigurationsinformationen von entsprechenden lokalen Konfigurationselementen konsistent sind;
wenn die Konfigurationsinformationen der Konfigurationselemente in der Abfrageanforderung jeweils mit gegenwärtigen Konfigurationsinformationen von entsprechenden lokalen Konfigurationselementen konsistent sind:
Aufrechterhalten (S103, S303) der kurzen Verbindung mit dem Client innerhalb einer im Voraus eingestellten Abfragedauer; und
Schieben (S104, S308), wenn, während der Dauer der kurzen Verbindung, gegenwärtige Konfigurationsinformationen eines Ziel-Konfigurationselements in den lokalen Konfigurationselementen mit Konfigurationsinformationen eines entsprechenden Konfigurationselements in der Abfrageanforderung inkonsistent sind, des Ziel-Konfigurationselements an den Client;
Empfangen einer Konfigurationsinformationen-Anforderung von dem Client; und
Senden, von dem Server an den Client, der gegenwärtigen Konfigurationsinformationen des Ziel-Konfigurationselements.

2. Verfahren nach Anspruch 1, ferner umfassend:
wenn die Konfigurationsinformationen der Konfigurationselemente in der Abfrageanforderung nicht jeweils mit gegenwärtigen Konfigurationsinformationen eines entsprechenden lokalen Konfigurationselements konsistent sind:
Erlangen des Ziel-Konfigurationselements von den lokalen Konfigurationselementen;
Schieben der gegenwärtigen Konfigurationsinformationen des Ziel-Konfigurationselements an den Client, so dass der Client die Konfiguration des Ziel-Konfigurationselements auf die gegenwärtigen Konfigurationsinformationen aktualisiert; und dann
Trennen der kurzen Verbindung mit dem Client.

3. Verfahren nach Anspruch 1, wobei das Schieben, wenn, während der Dauer der kurzen Verbindung, gegenwärtige Konfigurationsinformationen mindestens eines Ziel-Konfigurationselements in den lokalen Konfigurationselementen mit Konfigurationsinformationen eines entsprechenden Konfigurationselements in der Abfrageanforderung nicht übereinstimmen, der gegenwärtigen Konfigurationsinformationen des Ziel-Konfigurationselements an den Client umfasst:
Senden einer Abfrageantwort an den Client, wobei die Abfrageantwort das Ziel-Konfigurationselement umfasst.

4. Verfahren nach Anspruch 1, wobei das Schieben, wenn, während der Dauer der kurzen Verbindung, gegenwärtige Konfigurationsinformationen eines Ziel-Konfigurationselements in den lokalen Konfigurationselementen mit Konfigurationsinformationen eines entsprechenden Konfigurationselements in der Abfrageanforderung inkonsistent sind, der gegenwärtigen Konfigurationsinformationen des Ziel-Konfigurationselements an den Client umfasst:
Schieben, wenn, während der Dauer der kurzen Verbindung, Inkonsistenz zwischen gegenwärtigen Konfigurationsinformationen mindestens eines Ziel-Konfigurationselement in den lokalen Konfigurationselemente und Konfigurationsinformationen eines entsprechenden Konfigurationselements in der Abfrageanforderung zum ersten Mal vorkommt, der gegenwärtigen Konfigurationsinformationen des Ziel-Konfigurationselements an den Client; und dann
sofortiges Trennen der kurzen Verbindung mit dem Client.

5. Verfahren nach Anspruch 3, wobei das Verfahren nach dem Schieben, wenn, während der Dauer der kurzen Verbindung, gegenwärtige Konfigurationsinformationen mindestens eines Ziel-Konfigurationselements in den lokalen Konfigurationselementen mit Konfigurationsinformationen eines entsprechenden Konfigurationselements in der Abfrageanforderung inkonsistent sind, der gegenwärtigen Konfigurationsinformationen des Ziel-Konfigurationselements an den Client umfasst:
wenn die im Voraus eingestellte Abfragedauer erreicht wird, Trennen der kurzen Verbindung mit dem Client.

6. Verfahren nach Anspruch 4 oder 5, wobei das Verfahren nach dem Trennen der kurzen Verbindung mit dem Client umfasst:
nach Erreichen eines im Voraus eingestellten Zeitintervalls erneutes Erlangen einer durch den Client gesandten Abfrageanforderung.

7. Verfahren nach Anspruch 1, wobei das Aufrechterhalten der kurzen Verbindung mit dem Client innerhalb einer im Voraus eingestellten Abfragedauer, wenn die Konfigurationsinformationen der Konfigurationselemente in der Abfrageanforderung jeweils mit gegenwärtigen Konfigurationsinformationen von entsprechenden lokalen Konfigurationselementen konsistent sind, umfasst:
Senden einer asynchronen Verarbeitungsanforderung an den Client, so dass der Client die kurze Verbindung innerhalb der im Voraus eingestellten Abfragedauer aufrechterhält.

8. Konfigurationsinformationen-Schubverfahren, durchgeführt durch einen Client, umfassend:
Einrichten einer kurzen Verbindung mit einem Server;
Senden (S201) einer Abfrageanforderung an den Server, so dass der Server bestimmt, ob Konfigurationsinformationen von Konfigurationselementen in der Abfrageanforderung jeweils mit gegenwärtigen Konfigurationsinformationen von entsprechenden lokalen Konfigurationselementen konsistent sind, wobei die Abfrageanforderung die Konfigurationsinformationen der Konfigurationselemente umfasst;
Empfangen (S202) einer durch den Server gesandten Verbindungsaufrechterhaltungsanforderung zum Aufrechterhalten der kurzen Verbindung mit dem Server innerhalb einer im Voraus eingestellten Abfragedauer, wobei die Verbindungsaufrechterhaltungsanforderung durch den Server gesandt wird, wenn der Server bestimmt, dass die Konfigurationsinformationen der Konfigurationselemente in der Abfrageanforderung jeweils mit den gegenwärtigen Konfigurationsinformationen der entsprechenden lokalen Konfigurationselemente konsistent sind;
Empfangen (S203), von dem Server, einer Schubnachricht, die zum Schieben eines Ziel-Konfigurationselements verwendet wird, wobei die Schubnachricht durch den Server gesandt wird, wenn der Server bestimmt, während der Dauer der kurzen Verbindung, dass gegenwärtige Konfigurationsinformationen des Ziel-Konfigurationselements mit Konfigurationsinformationen eines entsprechenden Konfigurationselements in der Abfrageanforderung inkonsistent sind und das Ziel-Konfigurationselement ein Konfigurationselement in den lokalen Konfigurationselementen ist;
Senden einer Konfigurationsinformationen-Anforderung an den Server, wobei die Konfigurationsinformationen-Anforderung verwendet wird, den Server aufzufordern, die gegenwärtigen Konfigurationsinformationen des Ziel-Konfigurationselements zu liefern;
Empfangen, von dem Server, der gegenwärtigen Konfigurationsinformationen des Ziel-Konfigurationselements; und
Aktualisieren (S204) einer Konfiguration des Ziel-Konfigurationselements auf die gegenwärtigen Konfigurationsinformationen.

9. Verfahren nach Anspruch 8, ferner umfassend:
Empfangen einer Angabenachricht zum Trennen der kurzen Verbindung, die durch den Server gesandt wird, wobei die Angabenachricht durch den Server gesandt wird, nachdem die im Voraus eingestellte Abfragedauer erreicht wird und bevor der Server die Schubnachricht sendet; und
nach Erreichen des im Voraus eingestellten Zeitintervalls erneutes Senden einer Abfrageanforderung an den Server.

10. Verfahren nach Anspruch 8 oder 9, wobei die Verbindungsaufrechterhaltungsanforderung eine asynchrone Verarbeitungsanforderung ist, die verwendet wird, um anzuweisen, die kurze Verbindung mit dem Server innerhalb der im Voraus eingestellten Abfragedauer aufrechtzuerhalten.

11. Verfahren nach Anspruch 8, wobei das Verfahren nach dem Aktualisieren einer Konfiguration des Ziel-Konfigurationselements auf die gegenwärtigen Konfigurationsinformationen ferner umfasst:
nach Erreichen eines im Voraus eingestellten Zeitintervalls erneutes Senden einer Abfrageanforderung an den Server.

12. Konfigurationsinformationen-Schubvorrichtung entsprechend dem Server nach Anspruch 1, umfassend Mittel, die konfiguriert sind, jeden der Schritte des Verfahrens nach einem der Ansprüche 1 bis 7 auszuführen.

13. Konfigurationsinformationen-Schubvorrichtung entsprechend dem Client nach Anspruch 8, umfassend Mittel, die konfiguriert sind, jeden der Schritte des Verfahrens nach einem der Ansprüche 8 bis 11 auszuführen.

## Revendications

1. Procédé de poussée d'informations de configuration effectué par un serveur, comprenant :
l'établissement d'une connexion courte avec un client :
l'obtention (S101, S301) d'une demande de sondage envoyée par le client, dans lequel la demande de sondage comprend des informations de configuration d'éléments de configuration ;
la détermination (S 102, S302) si les informations de configuration des éléments de configuration dans la demande de sondage sont respectivement cohérentes avec des informations de configuration actuelle d'éléments de configuration locale correspondants ;
si les informations de configuration des éléments de configuration dans la demande de sondage sont respectivement cohérentes avec des informations de configuration actuelle d'éléments de configuration locale correspondants ;
le maintien (S103, S303) de la connexion courte avec le client au sein d'une durée de sondage prédéfinie ; et
la poussée (S 104, S308), si, dans la durée de la connexion courte, des informations de configuration actuelle d'un élément de configuration cible dans les éléments de configuration locale sont incohérentes avec des informations de configuration d'un élément de configuration correspondant dans la demande de sondage, de l'élément de configuration cible vers le client ;
la réception d'une demande d'informations de configuration en provenance du client ; et
l'envoi, du serveur au client, des informations de configuration actuelle de l'élément de configuration cible.

2. Procédé selon la revendication 1, comprenant en outre :
si les informations de configuration des éléments de configuration dans la demande de sondage ne sont pas respectivement cohérentes avec des informations de configuration actuelle de l'élément de configuration locale correspondant :
l'obtention de l'élément de configuration cible à partir des éléments de configuration locale ;
la poussée des informations de configuration actuelle de l'élément de configuration cible vers le client, de sorte que le client met à jour la configuration de l'élément de configuration cible vers les informations de configuration actuelle ; et ensuite
la rupture de la connexion courte avec le client.

3. Procédé selon la revendication 1, dans lequel la poussée, si, dans la durée de la connexion courte, des informations de configuration actuelle d'au moins un élément de configuration cible dans les éléments de configuration locale sont incohérentes avec des informations de configuration d'un élément de configuration correspondant dans la demande de sondage, des informations de configuration actuelle de l'élément de configuration cible vers le client, comprennent :
l'envoi d'une réponse au sondage au client, dans lequel la réponse au sondage comprend l'élément de configuration cible.

4. Procédé selon la revendication 1, dans lequel la poussée, si dans la durée de la connexion courte, des informations de configuration actuelle d'un élément de configuration cible dans les éléments de configuration locale sont incohérentes avec des informations de configuration d'un élément de configuration correspondant dans la demande de sondage, les informations de configuration actuelle de l'élément de configuration cible vers le client, comprend :
la poussée, si, dans la durée de la connexion courte, une incohérence entre des informations de configuration actuelle d'au moins un élément de configuration cible dans les éléments de configuration locale et des informations de configuration d'un élément de configuration correspondant dans la demande de sondage se produit pour la première fois, des informations de configuration actuelle de l'élément de configuration cible vers le client ; et ensuite
la rupture immédiate de la connexion courte avec le client.

5. Procédé selon la revendication 3, dans lequel après la poussée, si, dans la durée de la connexion courte, des informations de configuration actuelle d'au mois un élément de configuration cible dans les éléments de configuration locale sont incohérentes avec des informations de configuration d'un élément de configuration correspondant dans la demande de sondage, des informations de configuration actuelle de l'élément de configuration cible vers le client, le procédé comprend :
lorsque la durée de sondage prédéfinie est atteinte, la rupture de la connexion courte avec le client.

6. Procédé selon la revendication 4 ou 5, dans lequel après la rupture de la connexion courte avec le client, le procédé comprend :
après qu'un intervalle de temps prédéfini est atteint, la réobtention d'une demande de sondage envoyée par le client.

7. Procédé selon la revendication 1, dans lequel le maintien de la connexion courte avec le client au sein d'une durée de sondage prédéfinie si les informations de configuration des éléments de configuration dans la demande de sondage sont respectivement cohérentes avec des informations de configuration actuelle d'éléments de configuration locale correspondants comprend :
l'envoi d'une demande de traitement asynchrone au client, de sorte que le client maintient la connexion courte au sein de la durée de sondage prédéfinie.

8. Procédé de poussée d'informations de configuration mené à bien par un client, comprenant :
l'établissement d'une connexion courte avec un serveur ;
l'envoi (S201) d'une demande de sondage au serveur, de sorte que le serveur détermine si des informations de configuration d'éléments de configuration dans la demande de sondage sont respectivement cohérentes avec des informations de configuration actuelle d'éléments de configuration locale correspondants, dans lequel la demande de sondage comprend les informations de configuration des éléments de configuration ;
la réception (S202) d'une demande de maintien de connexion envoyée par le serveur destinée à maintenir la connexion courte avec le serveur au sein d'une durée de sondage prédéfinie, dans lequel la demande de maintien de connexion est envoyée par le serveur lorsque le serveur détermine que les informations de configuration des éléments de configuration dans la demande de sondage sont respectivement cohérentes avec les informations de configuration actuelle des éléments de configuration locale correspondants ;
la réception (S203), en provenance du serveur, d'un message de poussée utilisé pour pousser un élément de configuration cible, dans lequel le message de poussée est envoyé par le serveur lorsque le serveur détermine, dans la durée de la connexion courte, que des informations de configuration actuelle de l'élément de configuration cible sont incohérentes avec des informations de configuration d'un élément de configuration correspondant dans la demande de sondage, et l'élément de configuration cible est un élément de configuration dans les éléments de configuration locale ;
l'envoi d'une demande d'informations de configuration au serveur, dans lequel la demande d'informations de configuration est utilisée pour demander au serveur de délivrer les informations de configuration actuelle de l'élément de configuration cible ;
la réception en provenance du serveur des informations de configuration actuelle de l'élément de configuration cible ; et
la mise à jour (S204) d'une configuration de l'élément de configuration cible vers les informations de configuration actuelle.

9. Procédé selon la revendication 8, comprenant en outre :
la réception d'un message d'indication destiné à rompre la connexion courte qui est envoyé par le serveur, dans lequel le message d'indication est envoyé par le serveur après que la durée de sondage prédéfinie a été atteinte et avant que le serveur envoie le message de poussée ; et
après qu'un intervalle de temps prédéfini a été atteint, le renvoi d'une demande de sondage au serveur.

10. Procédé selon la revendication 8 ou 9, dans lequel la demande de maintien de connexion est une demande de traitement asynchrone utilisée pour ordonner de maintenir la connexion courte avec le serveur au sein de la durée de sondage prédéfinie.

11. Procédé selon la revendication 8, dans lequel après la mise à jour d'une configuration de l'élément de configuration cible vers les informations de configuration actuelle, le procédé comprend en outre :
après qu'un intervalle de temps prédéfini a été atteint, le renvoi d'une demande de sondage au serveur.

12. Dispositif de poussée d'informations de configuration correspondant au serveur selon la revendication 1, comprenant des moyens configurés pour réaliser chacune des étapes du procédé selon l'une quelconque des revendications 1 à 7.

13. Dispositif de poussée d'informations de configuration correspondant au client selon la revendication 8, comprenant des moyens configurés pour réaliser chacune des étapes du procédé selon l'une quelconque des revendications 8 à 11.
